(19) **Europäisches Patentamt**
**European Patent Office**
**Office européen des brevets**

(11) **EP 4 668 467 A1**

(12) **EUROPEAN PATENT APPLICATION**
published in accordance with Art. 153(4) EPC

(43) Date of publication:
**24.12.2025 Bulletin 2025/52**

(21) Application number: **23941252.1**

(22) Date of filing: **12.10.2023**

(51) International Patent Classification (IPC):
**H01M 50/536** (2021.01)   **H01M 50/531** (2021.01)
**H01M 50/533** (2021.01)

(52) Cooperative Patent Classification (CPC):
Y02E 60/10; Y02P 70/50

(86) International application number:
**PCT/CN2023/124303**

(87) International publication number:
**WO 2024/255028 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.06.2023   CN 202310691862**

(71) Applicant: **Contemporary Amperex Technology
Co., Limited
Ningde, Fujian 352100 (CN)**

(72) Inventors:
• **WU, Kai**
  **Ningde, Fujian 352100 (CN)**
• **GAO, Han**
  **Ningde, Fujian 352100 (CN)**
• **CHAI, Zhisheng**
  **Ningde, Fujian 352100 (CN)**
• **GU, Hui**
  **Ningde, Fujian 352100 (CN)**

(74) Representative: **Gong, Jinping
CocreateIP
Neumarkter Straße 21
81673 München (DE)**

(54) **BATTERY CELL, BATTERY, AND ELECTRIC APPARATUS**

(57)    A battery cell, a battery, and an electric apparatus are provided. The battery cell includes a housing, an electrode assembly, and a conductive member. The housing is provided with an electrode lead-out member. The electrode assembly is accommodated in the housing. The electrode assembly is a cylindrical wound structure. The electrode assembly includes a first electrode plate, where the first electrode plate includes a current collector and an active material layer, the current collector includes a coated region coated with the active material layer and a tab not coated with the active material layer, and the coated region and the tab are arranged along a first direction. The conductive member includes a conductive body and a bent portion, where at least a portion of the conductive body is connected to the tab to form a first connection region, the bent portion is configured to be electrically connected to the electrode lead-out member, the bent portion extends from an end of the conductive body away from the active material layer and is continuously bent multiple times, and in the first direction, the bent portion entirely extends beyond an end of the tab away from the coated region.

FIG. 5

## Description

## CROSS-REFERENCE TO RELATED APPLICATIONS

This application claims priority to Chinese Patent Application No. 202310691862.2, filed on June 12, 2023 and entitled "BATTERY CELL, BATTERY, AND ELECTRIC APPARATUS", which is incorporated herein by reference in its entirety.

## TECHNICAL FIELD

This application relates to the field of batteries, and in particular, to a battery cell, a battery, and an electric apparatus.

## BACKGROUND

With the development of new energy technology, batteries are increasingly widely used. For example, the batteries are used in mobile phones, notebook computers, electric scooters, electric vehicles, electric airplanes, electric ships, electric toy cars, electric toy ships, electric toy airplanes, electric tools, and the like.

The development of battery technology needs to consider multiple design factors simultaneously, such as energy density, cycle life, discharge capacity, charge-discharge rate, and other performance parameters. Additionally, the reliability of the battery needs to be considered. How to improve the reliability of batteries is an important research direction in the field of batteries.

## SUMMARY

This application provides a battery cell, a battery, and an electric apparatus, which can improve the reliability.

According to a first aspect, this application provides a battery cell including a housing, an electrode assembly, and a conductive member, where the housing is provided with an electrode lead-out member; the electrode assembly is accommodated in the housing, the electrode assembly is a cylindrical wound structure, the electrode assembly includes a first electrode plate, the first electrode plate includes a current collector and an active material layer, the current collector includes a coated region coated with the active material layer and a tab not coated with the active material layer, and the coated region and the tab are arranged along a first direction; and the conductive member includes a conductive body and a bent portion, where at least a portion of the conductive body is connected to the tab to form a first connection region, the bent portion is configured to be electrically connected to the electrode lead-out member, the bent portion extends from an end of the conductive body away from the active material layer and is continuously bent multiple times, and in the first direction, the entire bent portion extends beyond an end of the tab away from the coated region.

In the process of bending the conductive member to form the bent portion, stress generated by the bending is transmitted to the tab through the first connection region; and the tab and the conductive member are connected at the first connection region. Therefore, the first connection region has high strength and is not easily deformed, allowing reduction of stress transmitted to a boundary between the tab and the coated region, thereby reducing force applied to the active material layer, reducing the risk of detachment of an active material, and improving reliability of the battery cell. In embodiments of this application, connecting the conductive member to the tab and replacing bending of the tab with bending of the conductive member can reduce the risk of detachment of the active material and improve reliability of the battery cell.

In some embodiments, the conductive member is wound into a cylindrical structure. The cylindrical conductive member has a large current-carrying area and is capable of reducing heat generation and improving the current-carrying capacity of the battery cell.

In some embodiments, the conductive member is subjected to a flattening process to form the bent portion, an end of the bent portion away from the conductive body forms a flattened end face, and the flattened end face faces the electrode lead-out member and is configured to be electrically connected to the electrode lead-out member.

The flattened end face may be configured to abut against and be connected to other conductive structures so as to guide current generated by the electrode assembly to the electrode lead-out member. The flattened end face is relatively flat and can increase a direct contact area between the conductive member and other conductive structures, thereby improving the current-carrying capacity.

In some embodiments, in the first direction, the first connection region and the bent portion are spaced apart.

In the process of bending the conductive member to form the bent portion, stress is transmitted to the first connection region. Spacing the first connection region apart from the bent portion can reduce the stress transmitted to the first connection region, reducing the risk of connection failure between the conductive body and the tab. The embodiments of this application can also reduce the risk of bending the first connection region due to error, improving reliability of the connection between the conductive body and the tab.

In some embodiments, in the first direction, a minimum distance between the bent portion and the first connection region is D1, a maximum dimension of the bent portion is L1, and D1 and L1 satisfy: $0.5 \leq D1/L1 \leq 3$.

Setting the value of D1/L1 to be 0.5-3 can balance the stress received by the first connection region and space occupied by the conductive member, reducing the size of the conductive member while ensuring that the stress transmitted to the first connection region meets requirements, thereby improving space utilization and energy density of the battery cell.

In some embodiments, D1 is 1.5 mm to 3.5 mm, balancing the stress received by the first connection region and space occupied by the conductive member, reducing the risk of failure of the first connection region, and improving space utilization and energy density of the battery cell.

In some embodiments, L1 is 1 mm to 3 mm, reducing the risk of the bent portion being welded through, decreasing the stress transmitted to the first connection region, and improving reliability and energy density of the battery cell.

In some embodiments, the conductive body is welded to the tab to form the first connection region; and the battery cell further includes a reinforcement layer, where the reinforcement layer is connected to the conductive body and covers at least a portion of the first connection region.

The reinforcement layer can improve the strength of the electrode assembly at the first connection region, reducing the risk of cracking of the first connection region during the bending formation of the bent portion; and the reinforcement layer can also disperse stress generated by bending, reducing stress transmitted to the active material layer and reducing the risk of detachment of the active material. Additionally, after welding, some particles may remain on the first connection region, and these particles may fall into the electrode assembly, posing a risk of short circuit. The reinforcement layer can secure particles on the first connection region, reducing the risk of particles falling into the electrode assembly and improving reliability.

In some embodiments, the reinforcement layer includes an adhesive layer and a protective layer, and the protective layer is bonded to the first connection region via the adhesive layer. The protective layer can block burrs of a second electrode plate, reducing the risk of conduction between the burrs and the first connection region and improving reliability; and the adhesive layer can secure particles remaining on the first connection region, reducing the risk of particles falling into the electrode assembly and improving reliability.

In some embodiments, the reinforcement layer is further connected to the active material layer and a portion of the tab located between the active material layer and the conductive body in the first direction. During the formation of the bent portion, the reinforcement layer can connect the active material layer and the conductive body to the tab, reducing the risk of detachment of the active material and failure of the first connection region, thereby improving reliability of the battery cell.

In some embodiments, an elastic modulus of the reinforcement layer is greater than or equal to 0.2 MPa. The reinforcement layer, having a high elastic modulus, can support the first connection region during the formation of the bent portion and use of the battery cell, reducing deformation of the first connection region, reducing the risk of failure of the first connection region, and improving reliability.

In some embodiments, in the first direction, a minimum distance between the bent portion and the reinforcement layer is D2; and a melting point of the reinforcement layer is T; where $T \times D2 \geq 150°C \cdot mm$. Limiting the value of $T \times D2$ to be greater than or equal to $150°C \cdot mm$ can reduce the risk of softening and detachment of the reinforcement layer during welding, improving reliability of the battery cell.

In some embodiments, T is greater than or equal to 150°C, reducing the risk of softening and detachment of the reinforcement layer during welding, and improving reliability of the battery cell.

In some embodiments, the electrode assembly further includes a second electrode plate and a separator, a polarity of the first electrode plate is opposite to a polarity of the second electrode plate, and the separator is configured to separate the first electrode plate and the second electrode plate; and in the first direction, a distance D3 between an edge of the reinforcement layer close to the bent portion and an edge of the separator close to the bent portion is less than or equal to 2 mm.

When the edge of the reinforcement layer close to the bent portion extends beyond the edge of the separator close to the bent portion, a larger D3 leads to more additional space occupied by the reinforcement layer in the first direction and lower space utilization of the battery cell. When the edge of the separator close to the bent portion extends beyond the edge of the reinforcement layer close to the bent portion, a larger D3 leads to a smaller size of the reinforcement layer and a higher risk of the first connection region being exposed and piercing the separator. Limiting D3 to be less than or equal to 2 mm can reduce the risk of the separator being pierced and reduce loss of energy density.

In some embodiments, the battery cell includes two conductive members, where at least a portion of the tab is located between the conductive bodies of the two conductive members.

The two conductive members can increase the current-carrying area, reduce heat generation, and improve the current-carrying capacity of the battery cell. The bent portions of the two conductive members are wound together to form a denser region, reducing the risk of particles falling into the electrode assembly through gaps between the bent portions.

In some embodiments, when the bent portions of the two conductive members are flattened to be parallel to the first direction, a distance D4 between ends of the two conductive members away from the active material layer in the first direction is 0 mm to 6 mm.

A larger D4 leads to a greater difference in compression dimensions of the two conductive members during the bending process. In the embodiments of this application, limiting D4 to be 0 mm to 6 mm can reduce the risk of tearing due to excessive compression of a single conductive member, improving the current-carrying capacity and improving reliability of the battery cell.

In some embodiments, when the bent portions of the two conductive members are flattened to be parallel to the first direction, the ends of the two conductive members away from the active material layer are misaligned in the first direction.

During bending of the two conductive members, one conductive member is pressed first, and after a period of time, the two conductive members are pressed simultaneously. The embodiments of this application can reduce the pressure required for bending formation of the conductive members, thereby reducing force applied to the active material layer and reducing the risk of detachment of the active material.

In some embodiments, the conductive bodies of the two conductive members are connected to the tab to form the first connection region, improving overall structural strength and improving the current-carrying capacity.

In some embodiments, in the first direction, a portion of the conductive body extends beyond an end of the tab away from the coated region; and portions of the two conductive bodies extending beyond the tab in the first direction are connected to form a second connection region.

During the formation of the bent portion, the second connection region can act as a barrier, reducing the stress transmitted to the first connection region, reducing deformation of the tab, and reducing the risk of detachment of the active material. The second connection region can also transmit current between the two conductive bodies, improving current consistency across the two conductive members.

In some embodiments, in the first direction, the second connection region and the bent portion are spaced apart. Spacing the second connection region apart from the bent portion can reduce the stress transmitted to the second connection region, reducing the risk of connection failure between the two conductive bodies. The embodiments of this application can also reduce the risk of bending the second connection region due to error, improving reliability of the connection between the two conductive bodies.

In some embodiments, the current collector includes an insulating substrate and a conductive layer, the conductive layer is disposed on a surface of the insulating substrate, and the active material layer is applied on the conductive layer; the coated region includes a portion of the conductive layer coated with the active material layer, and the tab includes a portion of the conductive layer not coated with the active material layer; and the conductive body is connected to the conductive layer.

With the same thickness, compared to a current collector made of a metal foil, the current collector including the insulating substrate and having a multi-layer structure has a smaller weight, thereby further increasing the energy density of the battery cell. The conductive layer has a smaller thickness, so that when the current collector is pierced by an external structure, burrs generated at the pierced location of the conductive layer are smaller, reducing the risk of the burrs piercing the separator, thereby decreasing the likelihood of short circuit and improving reliability of the battery cell.

In some embodiments, the tab is welded to the conductive body to form the first connection region; the current collector includes two conductive layers, and the two conductive layers are respectively disposed on two sides of the insulating substrate; and the first connection region connects the conductive body and the two conductive layers.

The first connection region can electrically connect the two conductive layers, and current collected by the two conductive layers can be transmitted outward through the conductive member, thereby improving the current-carrying capacity of the battery cell.

In some embodiments, the battery cell includes two conductive members, where at least a portion of the tab is located between the conductive bodies of the two conductive members; and the tab and the two conductive bodies are welded to form the first connection region, and the first connection region connects the two conductive bodies and the two conductive layers.

At the first connection region, the two conductive bodies and the two conductive layers are electrically connected, and current collected by the two conductive layers can be transmitted outward through the two conductive members, thereby improving the current-carrying capacity of the battery cell.

In some embodiments, the first connection region includes a plurality of weld spots. The plurality of separately disposed weld spots are provided, so that heat accumulation during welding can be reduced, lowering temperature rise and improving welding performance.

In some embodiments, the number of the weld spots is k; a capacity of the battery cell is C; a thickness of the conductive layer is t; the weld spots form a weld surface on a surface of the conductive body facing away from the conductive layer; and a perimeter of the weld surface is L2; where k, C, t, and L2 satisfy: $0.1 \text{ mm}^2/\text{mAh} \le (t \times k \times L2)/C \le 1 \text{ mm}^2/\text{mAh}$.

t, k, and L2 are all positively correlated with a current-carrying capacity between the conductive layer and the conductive member. A larger C leads to higher requirement for a current-carrying capacity of the first connection region by the battery cell. Additionally, t, k, and L2 are also all positively correlated with connection strength between the conductive layer and the conductive member; and a larger value of $t \times k \times L2$ leads to higher connection strength between the conductive layer and the conductive member and a lower risk of cracking of the weld spots during the bending formation of the bent portion. Limiting the value of $(t \times k \times L2)/C$ to be greater than or equal to $0.1 \text{ mm}^2/\text{mAh}$ can meet current-carrying capacity requirements and improve connection strength between the conductive layer and the conductive member, reducing the risk of cracking of the weld spots.

The value of $t \times k \times L2$ is also positively correlated with space occupied by the first connection region; and a larger value of $t \times k \times L2$ leads to more space occupied by the first connection region. Limiting the value of $(t \times k \times L2)/C$ to be less than or equal to 1 $mm^2$/mAh can reduce loss of energy density while meeting current-carrying capacity requirements.

In some embodiments, L2 is 0.8 mm to 6 mm, reducing a welding area and reducing heat accumulation during welding.

In some embodiments, the battery cell further includes a current-collecting member, where the current-collecting member is connected to the electrode lead-out member; and the current-collecting member is welded to the bent portion. The bent portion is bent into multiple segments and can form a dense structure through winding, allowing the current-collecting member to abut closely against and be welded to the bent portion, improving the welding strength and the current-carrying capacity.

In some embodiments, the bent portion is provided with a weakened structure. The weakened structure is provided, so that the bending of the conductive member can be guided at a predetermined position, reducing stress generated during the formation of the bent portion, and reducing the risk of deformation of the tab and detachment of the active material layer.

In some embodiments, the bent portion forms the weakened structure by providing a through hole. The hole-forming process is simple and easy to implement.

According to a second aspect, this application provides a battery including a plurality of battery cells provided by any one of the embodiments of the first aspect.

According to a third aspect, this application provides an electric apparatus including the battery cell provided by any one of the embodiments of the first aspect, where the battery cell is configured to provide electrical energy.

BRIEF DESCRIPTION OF DRAWINGS

The following describes features, advantages, and technical effects of the example embodiments of this application with reference to the accompanying drawings.

FIG. 1 is a schematic structural diagram of a vehicle according to some embodiments of this application;

FIG. 2 is a schematic exploded view of a battery according to some embodiments of this application;

FIG. 3 is a schematic exploded view of a battery module shown in FIG. 2;

FIG. 4 is a schematic exploded view of a battery cell according to some embodiments of this application;

FIG. 5 is a partial schematic cross-sectional view of a battery cell according to some embodiments of this application;

FIG. 6 is a schematic structural diagram of an electrode assembly of a battery cell according to some embodiments of this application after partially unfolded;

FIG. 7 is an enlarged schematic view of a boxed portion of FIG. 5;

FIG. 8 is a schematic view of a first electrode plate and a conductive member of a battery cell according to some embodiments of this application before winding;

FIG. 9 is a schematic cross-sectional view taken along line A-A of FIG. 8;

FIG. 10 is an enlarged schematic view of a circled portion of FIG. 8;

FIG. 11 is a partial schematic cross-sectional view of a battery cell according to some other embodiments of this application;

FIG. 12 is a partial schematic cross-sectional view of a battery cell according to some other embodiments of this application;

FIG. 13 is an enlarged schematic view of a circled portion of FIG. 12;

FIG. 14 is a schematic view of a first electrode plate and a conductive member of FIG. 12 before winding; and

FIG. 15 is a partial schematic cross-sectional view of a battery cell according to some embodiments of this application.

In the drawings, the drawings are not necessarily drawn to actual scale.

Reference signs are as follows:

1. vehicle; 2. battery; 3. controller; 4. motor; 5. box; 5a. first box portion; 5b. second box portion; 5c. accommodating space; 6. battery module; 7. battery cell;
10. electrode assembly; 11. first electrode plate; 111. current collector; 111a. insulating substrate; 111b. conductive layer; 1111. coated region; 1112. tab; 112. active material layer; 12. second electrode plate; 13. separator; 13a. edge;

20. housing; 20a. electrode lead-out member; 21. shell; 22. end cover; 23. electrode terminal;

30. conductive member; 31. conductive body; 32. bent portion; 321. flattened end face; 322. weakened structure; 323. through hole;

40. first connection region; 41. weld spot; 41a. weld surface;

50. current-collecting member;

60. reinforcement layer; 61. adhesive layer; 62. protective layer; 60a. edge;

70. second connection region;

Z. first direction; V. winding direction; and X. winding axis.

DESCRIPTION OF EMBODIMENTS

To make the objectives, technical solutions, and advantages of the embodiments of this application clearer, the technical solutions in the embodiments of this application are described clearly below with reference to the drawings in the embodiments of this application. Apparently, the described embodiments are only some rather than all of the embodiments of this application. Based on the embodiments in this application, all other embodiments obtained by persons of ordinary skill in the art without creative effort fall within the protection scope of this application.

Unless otherwise defined, all technical and scientific terms used herein shall have the same meanings as commonly understood by persons skilled in the art to which this application belongs. The terms used herein are intended to merely describe the specific embodiments rather than to limit this application. The terms "include", "comprise", "have", and any other variations thereof in the specification, claims and brief description of drawings of this application are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in the embodiments of this application as suitable to specific situations.

The term "and/or" in this application is only an associative relationship for describing associated objects, indicating that three relationships may be present. For example, A and/or B may indicate three cases: presence of A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

The term "parallel" in some embodiments of this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering. For example, two directions may be considered to be perpendicular if an included angle between the two directions is 85°-90°, and two directions may be considered to be parallel if the included angle between the two directions is 0°-5°.

In this application, "a plurality of" means more than two (inclusive).

The battery cell may be a secondary battery. The secondary battery refers to a battery cell whose active material can be activated for continuous use through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead-acid battery cell, or the like, and the embodiments of this application impose no limitation thereon.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode to mainly prevent short circuits between positive and negative electrodes and to allow the active ions to pass through.

In some embodiments, the positive electrode may be a positive electrode plate, and the positive electrode plate may include a positive electrode current collector and a positive electrode active material provided on at least one surface of the positive electrode current collector.

As an example, the positive electrode current collector has two opposite surfaces in its thickness direction, and the positive electrode active material layer is disposed on either or both of the two opposite surfaces of the positive electrode current collector.

As an example, the positive electrode current collector may be a metal foil or a composite current collector. For example, as the metal foil, silver surface-treated aluminum or stainless steel, stainless steel, copper, aluminum, nickel, baked carbon, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a matrix of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to these materials, and may alternatively use other conventional well-known materials that can be used as positive electrode active materials for batteries. These positive electrode active materials may be used alone or in a combination of two or more. Examples of lithium-containing phosphate may include but are not limited to at least one of lithium iron phosphate (such as $LiFePO_4$ (also abbreviated as LFP)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon. Examples of lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ or $LiMn_2O_4$), lithium nickel cobalt oxide, lithium manganese cobalt oxide, lithium nickel manganese oxide, lithium nickel cobalt manganese oxide (for example $LiNi_{1/3}Co_{1/3}Mn_{1/3}O_2$ (also abbreviated as NCM333), $LiNi_{0.5}Co_{0.2}Mn_{0.3}O_2$ (also abbreviated as NCM523), $LiNi_{0.5}Co_{0.25}Mn_{0.25}O_2$ (also abbreviated as NCM211), $LiNi_{0.6}Co_{0.2}Mn_{0.2}O_2$ (also abbreviated as NCM622), $LiNi_{0.8}Co_{0.1}Mn_{0.1}O_2$ (also abbreviated as NCM811)), lithium nickel cobalt aluminum oxide (for example, $LiNi_{0.85}Co_{0.15}Al_{0.05}O_2$), and modified compounds thereof.

In some embodiments, the negative electrode may be a negative electrode plate, and the negative electrode plate may include a negative electrode current collector and a negative electrode active material provided on at least one surface of the negative electrode current collector.

As an example, the negative electrode current collector may use a metal foil, foamed metal, or a composite current collector. For example, as the metal foil, silver surface-treated aluminum or stainless steel, stainless steel, copper, aluminum, nickel, baked carbon, carbon, nickel, or titanium may be used. The foamed metal may be foamed nickel, foamed copper, foamed aluminum, foamed alloy, or foamed carbon. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, a matrix of polypropylene, polyethylene terephthalate, polybutylene terephthalate, polystyrene, or polyethylene).

As an example, the negative electrode current collector has two opposite surfaces in its thickness direction, and the negative electrode active material layer is disposed on either or both of the two opposite surfaces of the negative electrode current collector.

As an example, the negative electrode active material may use well-known negative electrode active materials for battery cells in the art. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and other conventional materials that can be used as negative electrode active materials for batteries may also be used. These negative electrode active materials may be used alone or in a combination of two or more.

In some embodiments, a material of the positive electrode current collector may be aluminum, and a material of the negative electrode current collector may be copper.

In some embodiments, the electrode assembly further includes a separator, and the separator is disposed between the positive electrode plate and the negative electrode plate.

In some embodiments, the separator is an isolating film. The isolating film is not limited to any particular type in this application, and may be any well-known porous isolating film with good chemical stability and mechanical stability.

As an example, a major material of the isolating film may be selected from at least one of glass fiber, non-woven fabric, polyethylene, polypropylene, polyvinylidene fluoride, or ceramics. The isolating film may be a single-layer film or a multi-layer composite film, and is not particularly limited. When the isolating film is a multi-layer composite film, materials of each layer may be the same or different, with no particular limitation. The separator may be an independent component located between the positive electrode and the negative electrode, or may be attached to surfaces of the positive electrode and the negative electrode.

In some embodiments, the separator is a solid electrolyte. The solid electrolyte is disposed between the positive electrode plate and the negative electrode plate, simultaneously serving to transmit ions and isolate the positive and negative electrodes.

In some embodiments, the battery cell further includes an electrolyte, and the electrolyte conducts ions between the positive electrode and the negative electrode. This application imposes no specific limitation on the type of electrolyte, and the electrolyte may be selected based on needs. The electrolyte may be liquid, gel, or solid.

In some embodiments, the liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone. The solvent may alternatively be selected from ether solvents. The ether solvents may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as a skeleton network of the electrolyte, combined with an ionic liquid-lithium salt.

The solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid electrolyte may be one or more of an oxide solid electrolyte (crystalline perovskite, a sodium superionic conductor, garnet, or an amorphous LiPON film), a sulfide solid electrolyte (a crystalline lithium superionic conductor (lithium germanium phosphorus sulfide, argyrodite) or amorphous sulfide), a halide solid electrolyte, a nitride solid electrolyte, and a hydride solid electrolyte.

As an example, the composite solid electrolyte is formed by adding an inorganic solid electrolyte filler to a polymer solid electrolyte.

In some embodiments, the electrode assembly is a wound structure. Optionally, the electrode assembly is a cylindrical wound structure.

In some embodiments, the electrode assembly is provided with tabs, and the tabs are capable of conducting current out of the electrode assembly. The tabs include a positive tab and a negative tab.

In some embodiments, the battery cell may include a housing. The housing is configured to package the electrode assembly, the electrolyte, and other components. The housing may be a steel housing, an aluminum housing, a plastic housing (for example, polypropylene), a composite metal housing (for example, copper-aluminum composite housing), an aluminum-plastic film, or the like.

As an example, the battery cell may be a cylindrical battery cell, a prismatic battery cell, a pouch battery cell, or a battery cell of another shape. The prismatic battery cell includes a square-shell battery cell, a blade-shaped battery cell, and a polyhedral prism battery. The polyhedral prism battery is, for example, a hexagonal prism battery.

The battery mentioned in the embodiments of this application refers to a single physical module including one or more battery cells to provide higher voltage and capacity.

In some embodiments, the battery may be a battery module, and when there are a plurality of battery cells, the plurality of battery cells are arranged and fastened to form a battery module.

In some embodiments, the battery may be a battery pack, the battery pack includes a box and a battery cell, and the battery cell or the battery module is accommodated in the box.

In some embodiments, the box may be used as part of a chassis structure of a vehicle. For example, part of the box may become at least part of the floor of a vehicle, or part of the box may become at least part of a cross beam and longitudinal beam of a vehicle.

In some embodiments, the battery may be an energy storage apparatus. The energy storage apparatus includes an energy storage container, an energy storage electric cabinet, and the like.

In a cylindrical electrode assembly, a tab typically needs to undergo flattening, smoothing, or other processes to bend an end of the tab and form a dense region, and the dense region can be configured to be connected to other conductive structures so as to conduct electrical energy generated by the electrode assembly out.

However, in the process of bending the tab, stress on the tab is transmitted to an active material layer of the electrode assembly, posing a risk of an active material being stressed and detaching. After the active material falls into the electrode assembly, the active material may pierce the separator, posing risks such as short circuit and affecting reliability of the battery cell.

In view of this, an embodiment of this application provides a technical solution that a conductive member is connected to the tab, and bending of the tab is replaced with bending of the conductive member, thereby reducing force applied to the active material layer, reducing the risk of detachment of the active material, and improving reliability of the battery cell.

The electrode assembly described in the embodiments of this application is applicable to a battery and an electric apparatus using the battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

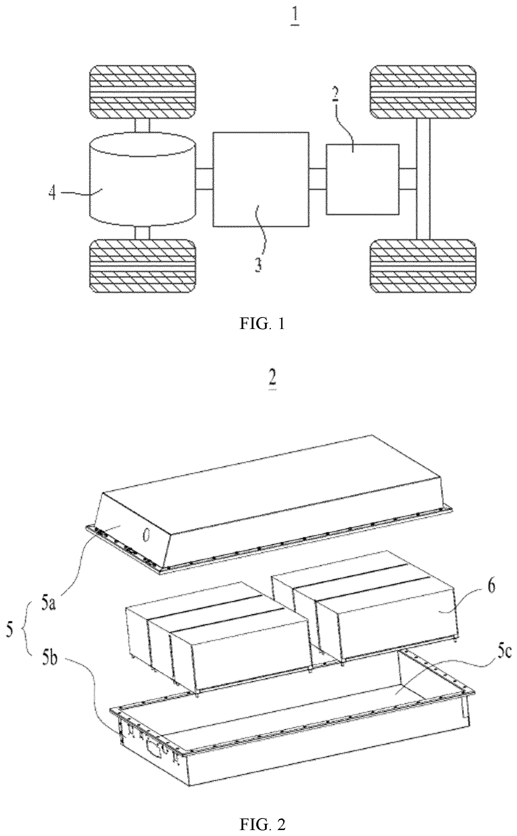

FIG. 1 is a schematic structural diagram of a vehicle according to some embodiments of this application.

As shown in FIG. 1, a battery 2 is disposed inside a vehicle 1, and the battery 2 may be disposed at the bottom, head, or tail of the vehicle 1. The battery 2 may be configured to supply power to the vehicle 1, for example, the battery 2 may serve as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or the natural gas to provide driving traction for the vehicle 1.

FIG. 2 is a schematic exploded view of a battery according to some embodiments of this application. As shown in FIG. 2, the battery 2 includes a box 5 and a battery cell (not shown), where the battery cell is accommodated in the box 5. The battery cell may be a smallest unit constituting the battery.

The box 5 is configured to accommodate the battery cell, and the box 5 may have various structures. In some embodiments, the box 5 may include a first box portion 5a and a second box portion 5b. The first box portion 5a and the second box portion 5b fit together such that the first box portion 5a and the second box portion 5b jointly define an accommodating space 5c for accommodating the battery cell. The second box portion 5b may be a hollow structure with an opening formed at an end, the first box portion 5a is a plate-shaped structure, and the first box portion 5a covers the opening side of the second box portion 5b so as to form the box 5 having the accommodating space 5c; and the first box portion 5a and the second box portion 5b may alternatively each be a hollow structure with an opening formed at an end, and the opening side of the first box portion 5a is engaged with the opening side of the second box portion 5b so as to form the box 5 having the accommodating space 5c. Certainly, the first box portion 5a and the second box portion 5b may be in various shapes, such as cylinder and cuboid.

In order to improve the airtightness after the connection of the first box portion 5a and the second box portion 5b, a sealing element such as a sealing adhesive and a sealing ring may further be disposed between the first box portion 5a and the second box portion 5b.

Assuming that the first box portion 5a fits on a top of the second box portion 5b, the first box portion 5a may also be referred to as an upper box cover, and the second box portion 5b may also be referred to as a lower box.

There may be one or more battery cells in the battery 2. If a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box 5; or certainly, the plurality of battery cells may be connected in series, parallel, or series-parallel first to form a battery module 6, and then a plurality of battery modules 6 are connected in series, parallel, or series-parallel to form an entirety which is accommodated in the box 5.

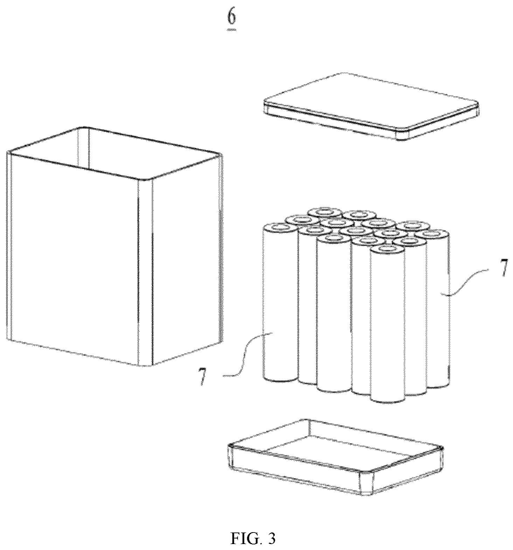

FIG. 3 is a schematic exploded view of the battery module shown in FIG. 2.

As shown in FIG. 3, in some embodiments, a plurality of battery cells 7 are provided. The plurality of battery cells 7 are connected in series, parallel, or series-parallel first to form a battery module 6, and then a plurality of battery modules 6 are connected in series, parallel, or series-parallel to form an entirety which is accommodated in the box.

A plurality of battery cells 7 in the battery module 6 may be electrically connected through a busbar to achieve parallel, series, or series-parallel connection of the plurality of battery cells 7 in the battery module 6.

The battery cell 7 may be a cylindrical battery cell, a prismatic battery cell, or a battery cell of another shape.

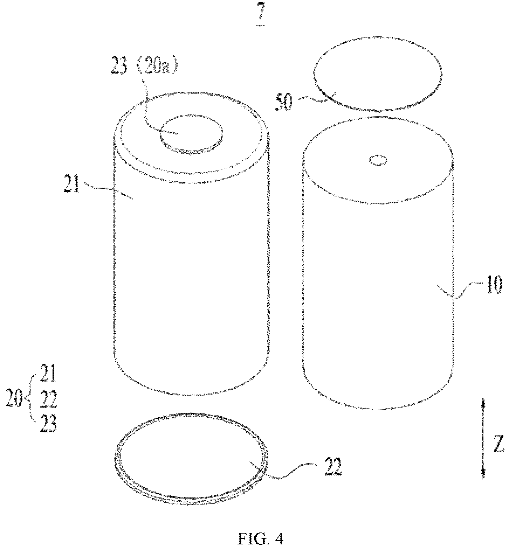

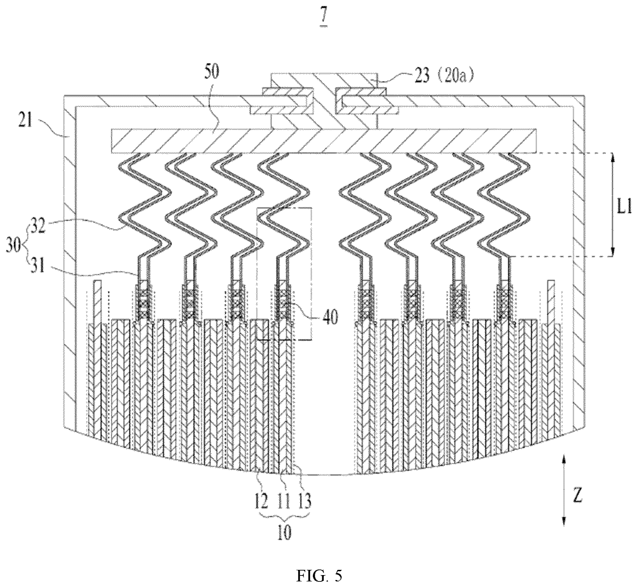

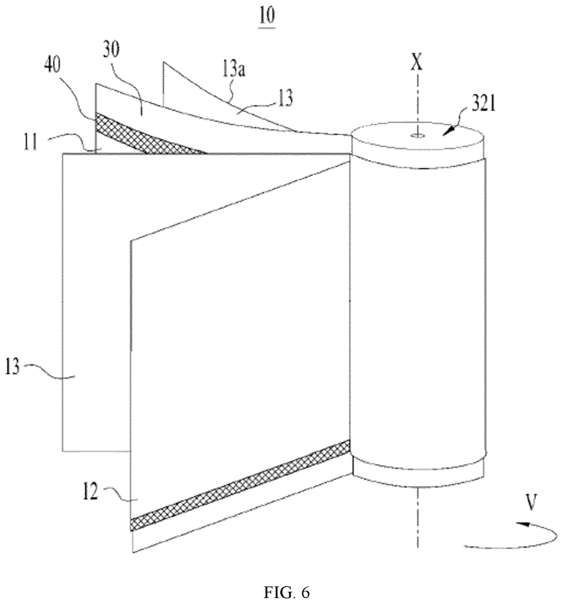

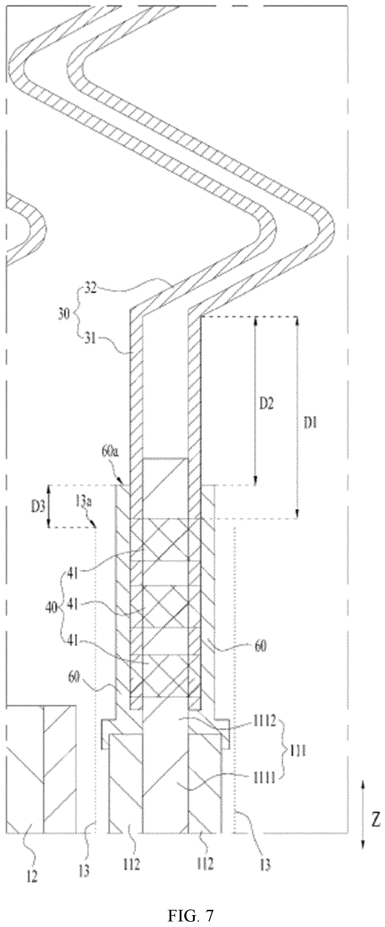

FIG. 4 is a schematic exploded view of a battery cell according to some embodiments of this application; FIG. 5 is a partial schematic cross-sectional view of a battery cell according to some embodiments of this application; FIG. 6 is a schematic structural diagram of an electrode assembly of a battery cell according to some embodiments of this application after partially unfolded; and FIG. 7 is an enlarged schematic view of a boxed portion of FIG. 5.

Referring to FIG. 4 to FIG. 7, some embodiments of this application provide a battery cell 7 including a housing 20, an electrode assembly 10, and a conductive member 30. The housing 20 is provided with an electrode lead-out member 20a. The electrode assembly 10 is accommodated in the housing 20. The electrode assembly 10 is a cylindrical wound structure.

The electrode assembly 10 includes a first electrode plate 11, the first electrode plate 11 includes a current collector 111 and an active material layer 112, the current collector 111 includes a coated region 1111 coated with the active material layer 112 and a tab 1112 not coated with the active material layer 112, and the coated region 1111 and the tab 1112 are arranged along a first direction Z.

The conductive member 30 includes a conductive body 31 and a bent portion 32. At least a portion of the conductive body 31 is connected to the tab 1112 to form a first connection region 40, the bent portion 32 is configured to be electrically connected to the electrode lead-out member 20a, the bent portion 32 extends from an end of the conductive body 31 away from the active material layer 112 and is continuously bent multiple times, and in the first direction Z, the entire bent portion 32 extends beyond an end of the tab 1112 away from the coated region 1111.

The housing 20 is a hollow structure, and an accommodating space for accommodating the electrode assembly 10 and an electrolyte is formed in the housing 20. The shape of the housing 20 may be determined based on a specific shape of the electrode assembly 10. For example, the housing 20 may be a cuboid housing.

As an example, the housing 20 includes a shell 21 and an end cover 22, where the shell 21 is provided with an opening, and the end cover 22 is configured to cover the opening.

The shell 21 is a component configured to fit with the end cover 22 to form an internal cavity of the battery cell 7, and the formed internal cavity can be used for accommodating the electrode assembly 10, the electrolyte, and other components.

The shell 21 and the end cover 22 may be independent components. For example, an opening may be provided in the shell 21, and the end cover 22 covers the opening to form the internal cavity of the battery cell 7.

The shell 21 may have various shapes and sizes, such as cuboid or hexagonal prism. Specifically, the shape of the shell 21 may be determined based on a specific shape and size of the electrode assembly 10. The shell 21 may be made of various materials, such as copper, iron, aluminum, stainless steel, and aluminum alloy. This is not particularly limited in the embodiments of this application.

The shape of the end cover 22 may be adapted to the shape of the shell 21 to fit with the shell 21. The material of the end cover 22 may be the same as or different from the material of the shell 21. Optionally, the end cover 22 may be made of a material with certain hardness and strength (such as copper, iron, aluminum, stainless steel, aluminum alloy, plastic, or the like), so that the end cover 22 is not easily deformed when subjected to extrusion or collision, enabling the battery cell 7 to have higher structural strength and improved reliability.

The end cover 22 is connected to the shell 21 by welding, bonding, snap-fitting, or other means.

The shell 21 may have an opening at one end or openings at two ends. In some examples, the shell 21 may be a structure with an opening on one side, and one end cover 22 is provided to cover the shell 21. In some other examples, the shell 21 may alternatively be a structure with openings on two sides; and two end covers 22 are provided, and the two end covers 22 respectively cover the two openings of the shell 21.

The electrode lead-out member 20a may be configured to achieve electrical connection between the electrode assembly 10 and an external circuit to enable charging and discharging of the electrode assembly 10. Optionally, the electrode lead-out member 20a may be configured to be connected to a busbar.

The form of the electrode lead-out member 20a may be set according to design requirements.

For example, in some examples, the shell 21 is electrically connected to the tab 1112 of the first electrode plate 11, and the shell 21 may serve as the electrode lead-out member 20a.

In some other examples, the end cover 22 is electrically connected to the tab 1112 of the first electrode plate 11, and the end cover 22 may serve as the electrode lead-out member 20a.

In still some other examples, the housing 20 further includes an electrode terminal 23, the electrode terminal 23 can be mounted on the shell 21 or the end cover 22, and the electrode terminal 23 is electrically connected to the tab 1112 of the first electrode plate 11. The electrode lead-out member 20a may include the electrode terminal 23.

The electrode assembly 10 is a component in the battery cell 7 where electrochemical reactions occur. The housing 20 may include one or more electrode assemblies 10.

The electrode assembly 10 includes a first electrode plate 11 and a second electrode plate 12, where a polarity of the first electrode plate 11 is opposite to a polarity of the second electrode plate 12. If the first electrode plate 11 is a positive electrode plate, the second electrode plate 12 is a negative electrode plate; and if the first electrode plate 11 is a negative electrode plate, the second electrode plate 12 is a positive electrode plate. Optionally, the electrode assembly 10 further includes a separator 13, where the separator 13 is configured to insulate and separate the first electrode plate 11 and the second electrode plate 12.

The electrode assembly 10 is a wound structure. For example, the first electrode plate 11, the separator 13, and the second electrode plate 12 are wound into an entirety along a winding direction V to form a cylindrical wound structure.

The electrode assembly 10 in the embodiments of this application is substantially cylindrical, and the shape allows deviations as conventionally understood and does not require the shape of the electrode assembly 10 to be absolutely cylindrical.

The current collector 111 has two opposite surfaces in its thickness direction, and the active material layer 112 is applied on at least one surface of the current collector 111. As an example, the current collector 111 may use a metal foil, a composite current collector 111, or other current-collecting structures.

The active material layer 112 includes an active material. For example, if the first electrode plate 11 is a positive electrode plate, the active material layer 112 includes a positive electrode active material. If the first electrode plate 11 is a negative electrode plate, the active material layer 112 includes a negative electrode active material.

The active material layer 112 may be configured to undergo an electrochemical reaction with the electrolyte to generate current. The coated region 1111 can collect current generated by the active material layer 112 and guide the current to the electrode lead-out member 20a through the tab 1112 and the conductive member 30.

Two surfaces of the tab 1112 are not covered by the active material layer 112. The surface of the tab 1112 may not be provided with a coating or may be coated with other coatings not containing an active material.

The tab 1112 may extend from an end of the coated region 1111 along the first direction Z. Optionally, the first direction Z is perpendicular to the winding direction V.

One or more tabs 1112 may be provided. In some examples, one tab 1112 may be provided, and the tab 1112 is wound multiple turns along the winding direction V. In some other examples, a plurality of tabs 1112 may be provided, and the plurality of tabs 1112 are spaced apart along the winding direction V.

The tab 1112 has two opposite surfaces in its thickness direction, and at least one surface of the tab 1112 is connected to the conductive member 30. In some examples, the tab 1112 is connected to one conductive member 30. In some other examples, the tab 1112 is connected to two conductive members 30, and the two conductive members 30 are respectively connected to the two surfaces of the tab 1112.

The conductive body 31 may be entirely connected to the tab 1112 or only partially connected to the tab 1112. Optionally, a portion of the conductive body 31 is stacked with and connected to the tab 1112 in a thickness direction of the tab 1112.

The conductive body 31 may be connected to the tab 1112 by welding, bonding, or other means.

The first connection region 40 may be a continuous region or may include a plurality of spaced sub-regions.

In the first direction Z, an end of the conductive body 31 away from the active material layer 112 may extend beyond the tab 1112 or may be flush with an end of the tab 1112 away from the coated region 1111.

In the first direction Z, the bent portion 32 extends from an end of the conductive body 31 away from the active material layer 112, and the entire bent portion 32 extends beyond the end of the tab 1112 away from the coated region 1111. In a radial direction of the electrode assembly 10, the bent portion 32 does not overlap with the tab 1112.

As an example, during the forming process of the battery cell 7, a portion of the conductive member 30 may be bent by flattening, smoothing, pressing, or other processes to form the bent portion 32.

Compared to the bent portion 32, the conductive body 31 substantially extends along the first direction Z. As an example, a portion of the conductive body 31 may be inclined at a small angle relative to the first direction Z, for example, an included angle between the inclined portion of the conductive body 31 and the first direction Z may be less than 10°.

The bent portion 32 is continuously bent multiple times. Optionally, the bent portion 32 is bent into an S-shape, a wavy shape, or other shapes.

The bent portion 32 and the first connection region 40 may be disposed adjacent to each other or spaced apart.

The bent portion 32 may be directly connected to the electrode lead-out member 20a or indirectly connected to the electrode lead-out member 20a through other conductive structures.

In the embodiments of this application, in the process of bending the conductive member 30 to form the bent portion 32, stress generated by the bending is transmitted to the tab 1112 through the first connection region 40. The tab 1112 and the conductive member 30 are connected at the first connection region 40. Therefore, the first connection region 40 has high strength and is not easily deformed, allowing reduction of stress transmitted to a boundary between the tab 1112 and the coated region 1111, thereby reducing force applied to the active material layer 112, reducing the risk of detachment of an active material, and improving reliability of the battery cell 7. In the embodiments of this application, connecting the conductive member 30 to the tab 1112 and replacing bending of the tab 1112 with bending of the conductive member 30 can reduce the risk of detachment of the active material and improve reliability of the battery cell 7.

In some embodiments, the conductive member 30 is wound into a cylindrical structure. The cylindrical conductive member 30 has a large current-carrying area and is capable of reducing heat generation and improving the current-carrying capacity of the battery cell 7.

In some embodiments, a winding axis X of the electrode assembly 10 is parallel to the first direction Z, and the conductive member 30 is wound multiple turns around the winding axis X to form a cylindrical structure.

In some embodiments, a central hole is formed at a winding center of the conductive member 30.

In some embodiments, the conductive member 30 is subjected to a flattening process to form the bent portion 32, an end of the bent portion 32 away from the conductive body 31 forms a flattened end face 321, and the flattened end face 321 faces the electrode lead-out member 20a and is configured to be electrically connected to the electrode lead-out member 20a.

The flattened end face 321 may be configured to abut against and be connected to other conductive structures so as to guide current generated by the electrode assembly 10 to the electrode lead-out member 20a. The flattened end face 321 is relatively flat and can increase a direct contact area between the conductive member 30 and other conductive structures, improving the current-carrying capacity.

In some embodiments, the battery cell 7 further includes a current-collecting member 50, where the current-collecting member 50 is connected to the electrode lead-out member 20a.

Optionally, the current-collecting member 50 is connected to the electrode lead-out member 20a by welding, snap-fitting, bonding, or other means to achieve electrical connection between the current-collecting member 50 and the electrode lead-out member 20a.

In some embodiments, the current-collecting member 50 is welded to the bent portion 32. The bent portion 32 is bent into multiple segments and can form a dense structure through winding, allowing the current-collecting member 50 to abut closely against and be welded to the bent portion 32, improving the welding strength and the current-carrying capacity.

In some embodiments, the current-collecting member 50 abuts against the flattened end face 321 of the bent portion 32.

In some embodiments, the current-collecting member 50 and the bent portion 32 are connected by laser welding. The bent portion 32 is relatively dense, which is capable of reducing the risk of laser leakage during welding, decreasing the likelihood of the separator 13 being burned by the laser, and improving reliability of the battery cell 7.

In some embodiments, in the first direction Z, the first connection region 40 and the bent portion 32 are spaced apart.

In the process of bending the conductive member 30 to form the bent portion 32, stress is transmitted to the first connection region 40. Spacing the first connection region 40 apart from the bent portion 32 can reduce the stress transmitted to the first connection region 40, reducing the risk of connection failure between the conductive body 31 and the tab 1112. The embodiments of this application can also reduce the risk of bending the first connection region 40 due to error, improving reliability of the connection between the conductive body 31 and the tab 1112.

In some embodiments, in the first direction Z, a minimum distance between the bent portion 32 and the first connection region 40 is D1, a maximum dimension of the bent portion 32 is L1, and D1 and L1 satisfy: $0.5 \leq D1/L1 \leq 3$.

A larger D1 leads to less stress transmitted to the first connection region 40 during the formation of the bent portion 32, more space occupied by the conductive member 30 in the first direction Z, and a lower energy density of the battery cell 7. Conversely, a smaller D1 leads to more stress transmitted to the first connection region 40 during the formation of the bent portion 32, less space occupied by the conductive member 30 in the first direction Z, and a higher energy density of the battery cell 7.

Under the premise that the density of the bent portion 32 meets requirements, a larger L1 leads to greater pressure required to bend the conductive member 30, more stress transmitted to the first connection region 40 during the bending process, and more space occupied by the bent portion 32. Conversely, a smaller L1 leads to less pressure required to bend the conductive member 30, less stress transmitted to the first connection region 40 during the bending process, and a higher risk of the bent portion 32 being welded through.

In the embodiments of this application, setting the value of D1/L1 to be 0.5-3 can balance stress received by the first connection region 40 and space occupied by the conductive member 30, reducing the size of the conductive member 30 while ensuring that the stress transmitted to the first connection region 40 meets requirements, thereby improving space utilization and energy density of the battery cell 7.

Optionally, the value of D1/L1 is 0.5, 0.7, 0.8, 1, 1.2, 1.5, 1.8, 2, 2.2, 2.5, 2.8, or 3.

In some embodiments, D1 is 1.5 mm to 3.5 mm. Optionally, D1 is 1.5 mm, 1.6 mm, 1.8 mm, 2 mm, 2.2 mm, 2.5 mm, 2.8 mm, 3 mm, 3.2 mm, or 3.5 mm.

The embodiments of this application can balance stress received by the first connection region 40 and space occupied by the conductive member 30, reducing the risk of failure of the first connection region 40 and improving space utilization and energy density of the battery cell 7.

In some embodiments, L1 is 1 mm to 3 mm. Optionally, L1 is 1 mm, 1.2 mm, 1.5 mm, 1.6 mm, 1.8 mm, 2 mm, 2.2 mm, 2.5 mm, 2.8 mm, or 3 mm.

The embodiments of this application can reduce the risk of the bent portion 32 being welded through, decrease the stress transmitted to the first connection region 40, and improve reliability and energy density of the battery cell 7.

In some embodiments, in the first direction Z, a minimum distance between the bent portion 32 and the separator 13 is greater than or equal to 1.5 mm. The embodiments of this application can reduce heat transmitted to the separator 13 during welding of the bent portion 32, reducing the risk of the separator 13 being scalded and improving reliability.

In some embodiments, the conductive body 31 is welded to the tab 1112 to form the first connection region 40; and optionally, the conductive body 31 is connected to the tab 1112 by ultrasonic welding.

In some embodiments, the battery cell 7 further includes a reinforcement layer 60, where the reinforcement layer 60 is connected to the conductive body 31 and covers at least a portion of the first connection region 40.

The reinforcement layer 60 can cover the entire first connection region 40 or only a portion of the first connection region 40. Optionally, the reinforcement layer 60 covers the entire first connection region 40.

The reinforcement layer 60 may be disposed only on the conductive body 31 or disposed on both the conductive body 31 and the tab 1112.

The reinforcement layer 60 can improve the strength of the electrode assembly at the first connection region 40, reducing the risk of cracking of the first connection region 40 during the bending formation of the bent portion 32; and the reinforcement layer 60 can also disperse stress generated by bending, reducing stress transmitted to the active material layer 112 and reducing the risk of detachment of the active material. Additionally, after welding, some particles may remain on the first connection region 40, and these particles may fall into the electrode assembly 10, posing a risk of short circuit. The reinforcement layer 60 can secure particles on the first connection region 40, reducing the risk of particles falling into the electrode assembly 10 and improving reliability.

In some embodiments, the reinforcement layer 60 includes an insulating material. The reinforcement layer 60 can improve insulation, reducing the risk of short circuit.

In some embodiments, the reinforcement layer 60 includes an adhesive. For example, the adhesive may include at least one of epoxy resin, acrylate, and styrene-butadiene rubber. Optionally, the reinforcement layer 60 is formed by coating with a colloid.

In some embodiments, the reinforcement layer 60 further includes ceramic particles. The ceramic particles may include at least one of boehmite, silicon oxide, and zirconium oxide. The ceramic particles can improve the puncture strength and insulation of the reinforcement layer 60.

In some embodiments, the reinforcement layer 60 includes an adhesive and ceramic particles. For example, the adhesive, the ceramic particles, and a solvent are mixed into a slurry, and then the slurry is applied on the electrode plate 11 and the conductive member 30; and the slurry is cured to form the reinforcement layer 60.

In some embodiments, the reinforcement layer 60 further includes a color identifier, such as carbon or Prussian blue.

In some embodiments, the reinforcement layer 60 is further connected to the active material layer 112 and a portion of the tab 1112 located between the active material layer 112 and the conductive body 31 in the first direction Z.

During the formation of the bent portion 32, the reinforcement layer 60 can connect the active material layer 112 and the conductive body 31 to the tab 1112, reducing the risk of detachment of the active material and failure of the first connection region 40, thereby improving reliability of the battery cell 7.

During the formation of the first electrode plate 11, the active material layer 112 generally needs to be rolled to increase a compacted density of the active material layer 112. During rolling, the coated region 1111 is subjected to force while the tab 1112 is not subjected to force, causing stress concentration at a boundary between the coated region 1111 and the tab 1112. In some embodiments, the reinforcement layer 60 covers the boundary between the coated region 1111 and the tab 1112, thereby reducing the risk of cracking of the current collector 111 and improving the current-carrying capacity.

In some embodiments, strength of the reinforcement layer 60 is greater than strength of the tab 1112, and strength of the reinforcement layer 60 is greater than strength of the conductive body 31. The reinforcement layer 60 is less deformable compared to the tab 1112 and the conductive body 31 and can effectively support the first connection region 40, reducing deformation of the first connection region 40, reducing the risk of failure of the first connection region 40, and improving reliability.

In some embodiments, an elastic modulus of the reinforcement layer 60 is greater than or equal to 0.2 MPa.

As an example, the elastic modulus of the reinforcement layer 60 refers to a Young's modulus of the reinforcement layer 60.

The reinforcement layer 60 has a high elastic modulus and can support the first connection region 40 during the formation of the bent portion 32 and use of the battery cell 7, reducing deformation of the first connection region 40, reducing the risk of failure of the first connection region 40, and improving reliability.

Optionally, the elastic modulus of the reinforcement layer 60 may be greater than or equal to 0.5 MPa.

Optionally, the elastic modulus of the reinforcement layer 60 may be 0.2 MPa, 0.3 MPa, 0.5 MPa, 0.8 MPa, 1 MPa, 2 MPa, or 5 MPa.

In some embodiments, in the first direction Z, a minimum distance between the bent portion 32 and the reinforcement layer 60 is D2, a melting point of the reinforcement layer 60 is T, and $T \times D2 \geq 150°C·mm$.

The bent portion 32 may be connected to other structures (such as a busbar) by welding. During welding, heat is transmitted to the reinforcement layer 60.

A smaller D2 leads to more heat transmitted to the reinforcement layer 60 during welding, a higher temperature of the reinforcement layer 60, and a higher risk of softening and detachment of the reinforcement layer 60. A larger D2 leads to less heat transmitted to the reinforcement layer 60 during welding and a lower risk of softening and detachment of the reinforcement layer 60.

A smaller T leads to a higher risk of softening and detachment of the reinforcement layer 60 when heated. A larger T leads to a lower risk of softening and detachment of the reinforcement layer 60 when heated.

In the embodiments of this application, limiting the value of $T \times D2$ to be greater than or equal to 150°C·mm can reduce the risk of softening and detachment of the reinforcement layer 60 during welding, improving reliability of the battery cell 7.

Optionally, the value of $T \times D2$ is greater than or equal to 500°C·mm.

Optionally, the value of $T \times D2$ is 150°C·mm, 250°C·mm, 350°C·mm, 450°C·mm, 500°C·mm, 600°C·mm, 800°C·mm, 1000°C·mm, 1500°C·mm, or 2000°C·mm.

In some embodiments, T is greater than or equal to 150°C, reducing the risk of softening and detachment of the reinforcement layer 60 during welding and improving reliability of the battery cell 7.

Optionally, T is 150°C, 170°C, 180°C, 200°C, 250°C, 300°C, 400°C, 500°C, 700°C, 900°C, 1000°C, 1500°C, 1800°C, or 2000°C.

In some embodiments, a dimension of the reinforcement layer 60 in the first direction Z may be 1 mm to 10 mm.

Optionally, the dimension of the reinforcement layer 60 in the first direction Z may be 2.5 mm to 5 mm.

Optionally, the dimension of the reinforcement layer 60 in the first direction Z may be 1 mm, 2 mm, 2.5 mm, 3 mm, 3.5 mm, 4.5 mm, 5 mm, 6 mm, 7 mm, 8 mm, 9 mm, or 10 mm.

In some embodiments, in the first direction Z, a dimension of a region, covered by the reinforcement layer 60, of a surface of the active material layer 112 facing away from the current collector 111 is 0.5 mm to 1 mm. Optionally, in the first direction Z, the dimension of the region, covered by the reinforcement layer 60, of the surface of the active material layer 112 facing away from the current collector 111 is 0.5 mm, 0.6 mm, 0.7 mm, 0.8 mm, 0.9 mm, or 1 mm.

The reinforcement layer 60 can secure the active material layer 112 to reduce detachment of the active material.

In some embodiments, a thickness of the reinforcement layer 60 is 3 μm to 100 μm. Optionally, the thickness of the reinforcement layer 60 is 3 μm, 5 μm, 10 μm, 20 μm, 30 μm, 50 μm, 70 μm, 80 μm, 90 μm, or 10 μm.

In some embodiments, the electrode assembly 10 further includes a second electrode plate 12 and a separator 13, a polarity of the first electrode plate 11 is opposite to a polarity of the second electrode plate 12, and the separator 13 is configured to separate the first electrode plate 11 and the second electrode plate 12.

In some embodiments, in the first direction Z, a distance D3 between an edge 60a of the reinforcement layer 60 close to the bent portion 32 and an edge 13a of the separator 13 close to the bent portion 32 is less than or equal to 2 mm.

When the edge of the reinforcement layer 60 close to the bent portion 32 extends beyond the edge of the separator 13 close to the bent portion 32, a larger D3 leads to more additional space occupied by the reinforcement layer 60 in the first direction Z and lower space utilization of the battery cell 7. When the edge of the separator 13 close to the bent portion 32 extends beyond the edge of the reinforcement layer 60 close to the bent portion 32, a larger D3 leads to a smaller size of the reinforcement layer 60 and a higher risk of the first connection region 40 being exposed and piercing the separator 13.

In this application, limiting D3 to be less than or equal to 2 mm can reduce the risk of the separator 13 being pierced and reduce loss of energy density.

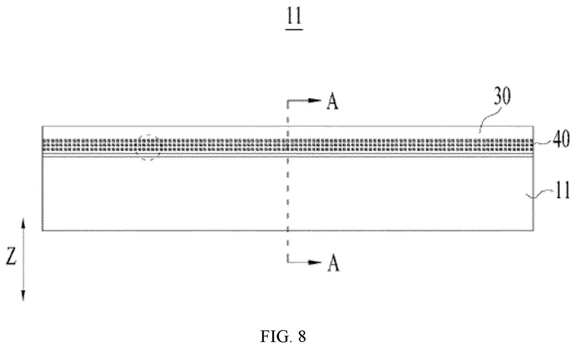

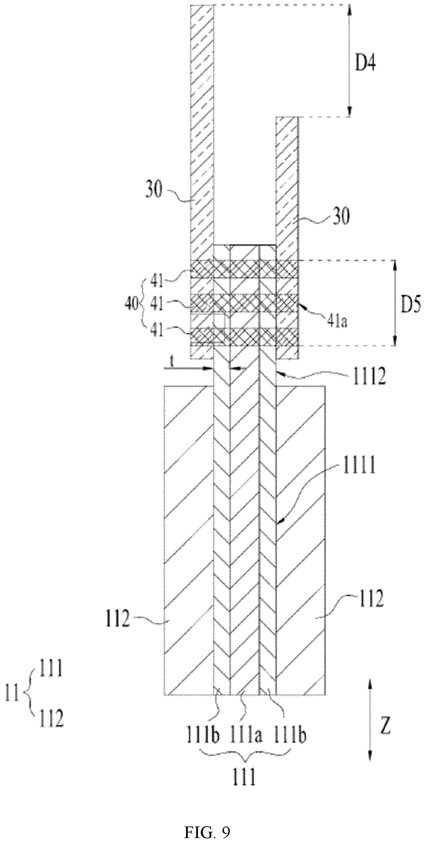

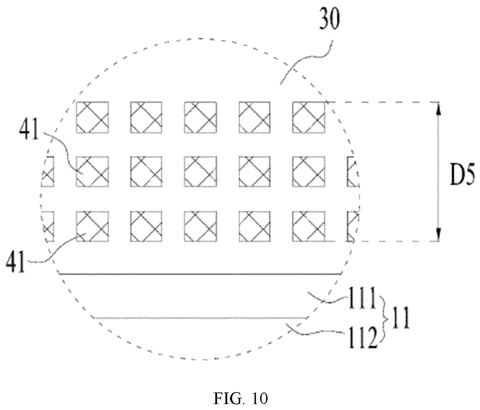

FIG. 8 is a schematic view of a first electrode plate and a conductive member of a battery cell according to some embodiments of this application before winding; FIG. 9 is a schematic cross-sectional view taken along line A-A of FIG. 8; and FIG. 10 is an enlarged schematic view of a circled portion of FIG. 8.

Referring to FIG. 5 to FIG. 10 together, in some embodiments, the battery cell 7 includes two conductive members 30, where at least a portion of the tab 1112 is located between the conductive bodies 31 of the two conductive members 30.

The two conductive members 30 can increase the current-carrying area, reduce heat generation, and improve the current-carrying capacity of the battery cell 7.

The bent portions 32 of the two conductive members 30 are wound together to form a denser region (for example, a flattened region), reducing the risk of particles falling into the electrode assembly 10 through gaps between the bent portions 32.

In some embodiments, when the bent portions 32 of the two conductive members 30 are flattened to be parallel to the first direction Z, a distance D4 between ends of the two conductive members 30 away from the active material layer 112 in the first direction Z is 0 mm to 6 mm.

For example, the electrode assembly 10 can be disassembled and the first electrode plate 11 is unfolded first, then a device can be used to re-flatten the bent portions 32 of the conductive members 30, and then the distance D4 is measured.

A larger D4 leads to a greater difference in compression dimensions of the two conductive members 30 during the bending process. In the embodiments of this application, limiting D4 to be 0 mm to 6 mm can reduce the risk of tearing due to excessive compression of a single conductive member 30, improving the current-carrying capacity and improving reliability of the battery cell 7.

Optionally, D4 is 0 mm, 0.5 mm, 1 mm, 2 mm, 3 mm, 4 mm, 5 mm, or 6 mm.

In some embodiments, when the bent portions 32 of the two conductive members 30 are flattened to be parallel to the first direction Z, a difference in dimensions of the two conductive members 30 along the first direction Z is 0 mm to 6 mm. Optionally, ends of the two conductive members 30 close to the active material layer 112 are aligned in the first direction Z.

In some embodiments, when the bent portions 32 of the two conductive members 30 are flattened to be parallel to the first direction Z, the ends of the two conductive members 30 away from the active material layer 112 are misaligned in the first direction Z. For example, D4 is greater than 0 mm.

During bending of the two conductive members 30, one conductive member 30 is pressed first, and after a period of time, the two conductive members 30 are pressed simultaneously. The embodiments of this application can reduce the pressure required for bending formation of the conductive members 30, thereby reducing force applied to the active material layer 112 and reducing the risk of detachment of the active material.

In some embodiments, D4 is 0.5 mm, 1 mm, 1.5 mm, 2 mm, 2.5 mm, 3 mm, 3.5 mm, 4 mm, 4.5 mm, or 5 mm.

In some embodiments, when the bent portions 32 of the two conductive members 30 are flattened to be parallel to the first direction Z, a dimension of each conductive member 30 along the first direction Z is greater than or equal to 3 mm.

In some embodiments, the conductive bodies 31 of the two conductive members 30 are connected to the tab 1112 to form the first connection region 40, improving overall structural strength and improving the current-carrying capacity.

In some embodiments, the current collector 111 includes an insulating substrate 111a and a conductive layer 111b, the conductive layer 111b is disposed on a surface of the insulating substrate 111a, and the active material layer 112 is applied on the conductive layer 111b; the coated region 1111 includes a portion of the conductive layer 111b coated with the active material layer 112, and the tab 1112 includes a portion of the conductive layer 111b not coated with the active material layer 112; and the conductive body 31 is connected to the conductive layer 111b.

For example, the tab 1112 further includes a portion of the insulating substrate 111a not overlapping with the active material layer 112, and the coated region 1111 further includes a portion of the insulating substrate 111a corresponding to the active material layer 112.

The conductive layer 111b may be disposed on one side surface of the insulating substrate 111a or on two opposite side surfaces of the insulating substrate 111a. Optionally, the two side surfaces of the insulating substrate 111a are both provided with conductive layers 111b, and surfaces of the two conductive layers 111b are coated with the active material layer 112.

Optionally, the insulating substrate 111a may include a polymer material, and the polymer material includes polypropylene, polyethylene terephthalate, polybutylene terephthalate, polystyrene, or polyethylene.

The conductive layer 111b may include a metal material, and the metal material includes aluminum, aluminum alloy, nickel, nickel alloy, titanium, titanium alloy, silver, or silver alloy.

As an example, the metal material is deposited onto a surface of the insulating substrate 111a to form the conductive layer 111b.

With the same thickness, compared to a current collector made of a metal foil, the current collector 111 including the insulating substrate 111a and having a multi-layer structure has a smaller weight, thereby further increasing the energy density of the battery cell 7. The conductive layer 111b has a smaller thickness, so that when the current collector 111 is pierced by an external structure, burrs generated at a pierced location of the conductive layer 111b are smaller, reducing the risk of the burrs piercing the separator 13, thereby decreasing the likelihood of short circuit and improving reliability of the battery cell 7.

The conductive layer 111b has a small thickness and low strength. If the tab 1112 is directly subjected to bending treatment (for example, flattening), the conductive layer 111b is prone to damage during bending, affecting the current-carrying capacity of the conductive layer 111b. Additionally, if the conductive layer 111b is damaged, the issues such as welding omission may occur when the tab 1112 is welded to a busbar. In the embodiments of this application, connecting the conductive member 30 to the tab 1112 can reduce the risk of deformation and damage to the conductive layer 111b, improve conductive performance of the conductive layer 111b, and reduce the risk of welding omission.

In some embodiments, a thickness of the conductive layer 111b may be 0.5 μm to 5 μm. Optionally, the thickness of the conductive layer 111b is 1 μm to 3 μm.

In some embodiments, a thickness of the current collector 111 may be 2 μm to 50 μm. Optionally, the thickness of the current collector 111 may be 4 μm to 20 μm.

In some embodiments, a thickness of the conductive member 30 is 2 μm to 30 μm. Optionally, the thickness of the conductive member 30 is 3 μm to 20 μm.

In some embodiments, the thickness of the conductive member 30 is greater than the thickness of the conductive layer 111b.

In some embodiments, the tab 1112 is welded to the conductive body 31 to form the first connection region 40. The current collector 111 includes two conductive layers 111b, and the two conductive layers 111b are respectively disposed on two sides of the insulating substrate 111a. The first connection region 40 connects the conductive body 31 and the two conductive layers 111b.

The first connection region 40 can electrically connect the two conductive layers 111b, and current collected by the two conductive layers 111b can be transmitted outward through the conductive member 30, thereby improving the current-carrying capacity of the battery cell 7.

In some embodiments, the battery cell 7 includes two conductive members 30, where at least a portion of the tab 1112 is located between the conductive bodies 31 of the two conductive members 30; and the tab 1112 and the two conductive bodies 31 are welded to form the first connection region 40, and the first connection region 40 connects the two conductive bodies 31 and the two conductive layers 111b.

At the first connection region 40, the two conductive bodies 31 and the two conductive layers 111b are electrically connected, and current collected by the two conductive layers 111b can be transmitted outward through the two conductive members 30, thereby improving the current-carrying capacity of the battery cell 7.

In some embodiments, the first connection region 40 includes a plurality of weld spots 41.

The weld spots 41 may be circular, rectangular, triangular, trapezoidal, elliptical, polygonal, or of other shapes.

The plurality of separately disposed weld spots 41 are provided, so that heat accumulation during welding can be reduced, lowering temperature rise and improving welding performance.

In some embodiments, each weld spot 41 connects the two conductive bodies 31 and the two conductive layers 111b.

In some embodiments, ultrasonic welding is performed in a region where the conductive member 30 overlaps with the conductive layer 111b, and pressure is applied simultaneously, so that the insulating substrate 111a can be melted and extruded. The weld spots 41 can penetrate the insulating substrate 111a to connect the two conductive layers 111b.

In some embodiments, the plurality of weld spots 41 of the first connection region 40 are arranged in an array along the winding direction V and the first direction Z.

In some embodiments, a dimension D5 of the first connection region 40 along the first direction Z is 1 mm to 5 mm. Optionally, D5 is 2 mm to 4 mm.

As an example, D5 is 1 mm, 2 mm, 3 mm, 4 mm, or 5 mm.

In some embodiments, the number of the weld spots 41 is k; a capacity of the battery cell 7 is C; a thickness of the conductive layer 111b is t; the weld spots 41 form a weld surface 41a on a surface of the conductive body 31 facing away from the conductive layer 111b, and a perimeter of the weld surface 41a is L2, where k, C, t, and L2 satisfy: $0.1 \text{ mm}^2/\text{mAh} \leq (t \times k \times L2)/C \leq 1 \text{ mm}^2/\text{mAh}$.

t, k, and L2 are all positively correlated with a current-carrying capacity between the conductive layer 111b and the conductive member 30. For example, when t and k are constant, a larger L2 leads to a larger welding area between the conductive body 31 and the conductive layer 111b and a higher current-carrying capacity between the conductive layer 111b and the conductive member 30. When t and L2 are constant, a larger k leads to a larger area of the first connection region 40 and a higher current-carrying capacity between the conductive layer 111b and the conductive member 30. When L2 and k are constant, a larger t leads to smaller resistance of the conductive layer 111b and a higher current-carrying capacity between the conductive layer 111b and the conductive member 30.

A larger C leads to higher requirement for a current-carrying capacity of the first connection region 40 by the battery cell 7.

Additionally, t, k, and L2 are also all positively correlated with connection strength between the conductive layer 111b and the conductive member 30; and a larger value of $t \times k \times L2$ leads to higher connection strength between the conductive layer 111b and the conductive member 30 and a lower risk of cracking of the weld spots 41 during the bending formation of the bent portion 32.

In the embodiments of this application, limiting the value of $(t \times k \times L2)/C$ to be greater than or equal to $0.1 \text{ mm}^2/\text{mAh}$ can meet current-carrying capacity requirements and improve connection strength between the conductive layer 111b and the conductive member 30, reducing the risk of cracking of the weld spots 41.

The value of $t \times k \times L2$ is also positively correlated with space occupied by the first connection region 40; and a larger value of $t \times k \times L2$ leads to more space occupied by the first connection region 40 and a lower energy density of the battery cell 7.

In the embodiments of this application, limiting the value of (t × k × L2)/C to be less than or equal to 1 mm²/mAh can reduce loss of energy density while meeting current-carrying capacity requirements.

In some embodiments, L2 is 0.8 mm to 6 mm. In the embodiments of this application, limiting L2 to be greater than or equal to 0.8 mm can increase the current-carrying capacity at a single weld spot 41. Limiting L2 to be less than or equal to 6 mm can reduce a welding area and reduce heat accumulation during welding.

Optionally, L2 is 0.8 mm, 1 mm, 1.2 mm, 1.5 mm, 2 mm, 2.5 mm, 3 mm, 4 mm, 5 mm, or 6 mm.

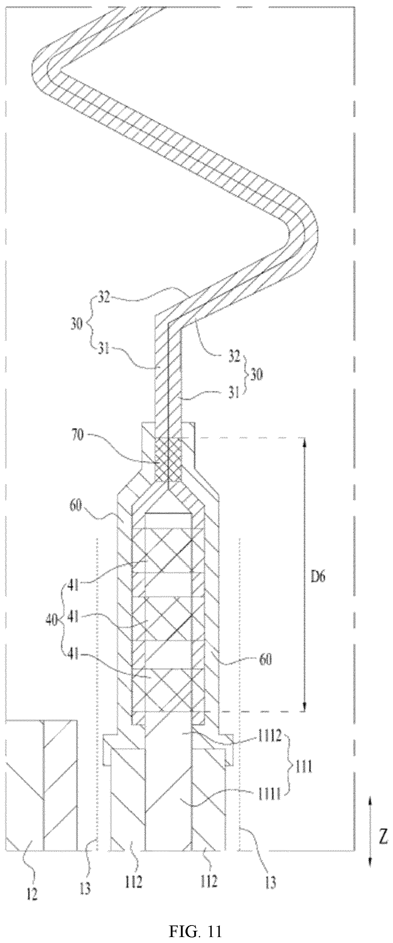

FIG. 11 is a partial schematic cross-sectional view of a battery cell according to some other embodiments of this application.

As shown in FIG. 11, in some embodiments, in the first direction Z, a portion of the conductive body 31 extends beyond an end of the tab 1112 away from the coated region 1111. Portions of the two conductive bodies 31 extending beyond the tab 1112 in the first direction Z are connected to form a second connection region 70.

During the formation of the bent portion 32, the second connection region 70 can act as a barrier, reducing stress transmitted to the first connection region 40, reducing deformation of the tab 1112, and reducing the risk of detachment of the active material. The second connection region 70 can also transmit current between the two conductive bodies 31, improving current consistency across the two conductive members 30.

In some embodiments, the two conductive bodies 31 are welded to form the second connection region 70.

In some embodiments, the first connection region 40 and the second connection region 70 are formed in a same welding process.

In some embodiments, in the first direction Z, the second connection region 70 and the bent portion 32 are spaced apart.

Spacing the second connection region 70 apart from the bent portion 32 can reduce stress transmitted to the second connection region 70, reducing the risk of connection failure between the two conductive bodies 31. The embodiments of this application can also reduce the risk of bending the second connection region 70 due to error, improving reliability of the connection between the two conductive bodies 31.

In some embodiments, the reinforcement layer 60 further covers the second connection region 70.

In some embodiments, in the first direction Z, a total dimension D6 of the first connection region 40 and the second connection region 70 is 2 mm to 10 mm. Optionally, D6 is 2 mm to 5 mm.

A larger D6 leads to more space occupied by the first connection region 40 and the second connection region 70 in the first direction Z; and a smaller D6 leads to lower connection strength between the tab 1112 and the two conductive members 30.

The embodiments of this application can improve connection strength between the tab 1112 and the two conductive members 30, reducing the risk of connection failure between the tab 1112 and the conductive members 30, and reducing loss of energy density.

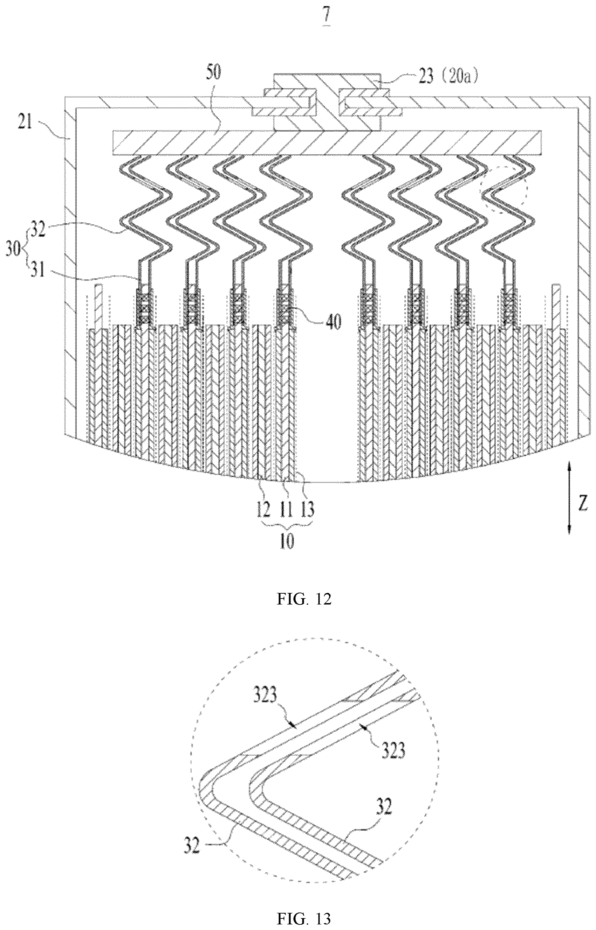

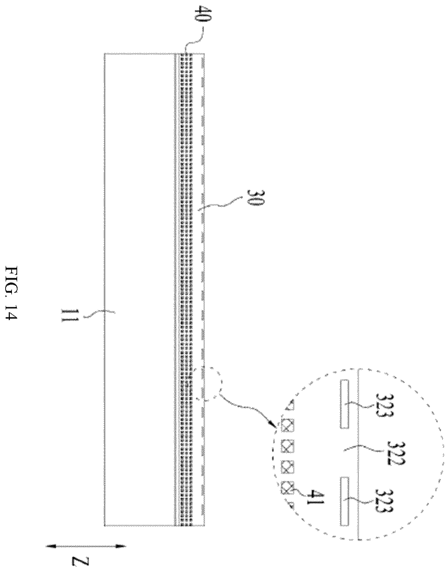

FIG. 12 is a partial schematic cross-sectional view of a battery cell according to some other embodiments of this application; FIG. 13 is an enlarged schematic view of a circled portion of FIG. 12; and FIG. 14 is a schematic view of a first electrode plate and a conductive member of FIG. 12 before winding.

Referring to FIG. 12 to FIG. 14, in some embodiments, the bent portion 32 is provided with a weakened structure 322.

Strength of the weakened structure 322 is relatively lower than strength of other portions of the bent portion 32, and the weakened structure 322 is a portion of the bent portion 32 prone to deformation. In the embodiments, the weakened structure 322 can be formed by thinning a predetermined region of the bent portion 32, the weakened structure 322 can be formed by performing material treatment on a predetermined region of the bent portion 32, the weakened structure 322 can be formed by performing heat treatment on a predetermined region of the bent portion 32, the weakened structure 322 can be formed by performing hole-forming treatment on a predetermined region of the bent portion 32, or the weakened structure 322 can be formed by other means in a predetermined region of the bent portion 32.

The weakened structure 322 is provided, so that the bending of the conductive member 30 can be guided at a predetermined position, reducing stress generated during the formation of the bent portion 32, reducing the risk of deformation of the tab 1112 and detachment of the active material layer 112.

In some embodiments, the bent portion 32 forms the weakened structure 322 by providing a through hole 323.

The through hole 323 is provided, so that a local cross-sectional area of the bent portion 32 can be reduced to form the weakened structure 322. The hole-forming process is simple and easy to implement.

In some embodiments, a plurality of through holes 323 are provided. Optionally, the plurality of through holes 323 are spaced apart along the winding direction V; and after the first electrode plate 11 is flattened, the plurality of through holes 323 are spaced apart along a length direction of the first electrode plate 11.

In some embodiments, the through hole 323 and the first connection region 40 are spaced apart.

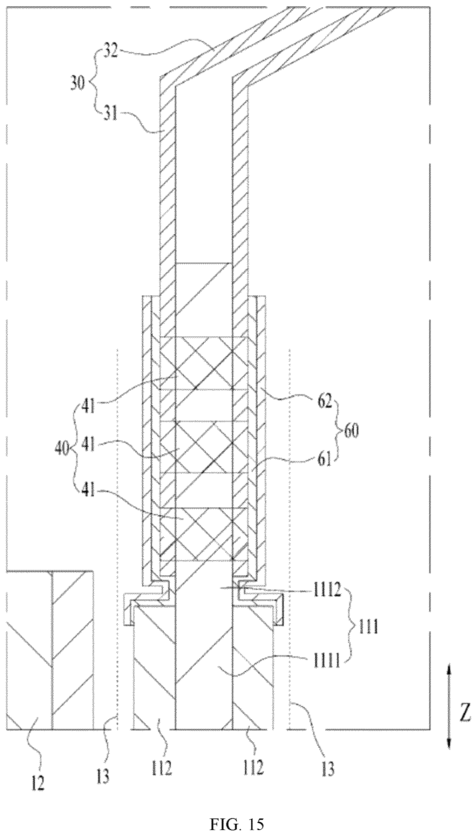

FIG. 15 is a partial schematic cross-sectional view of a battery cell according to some embodiments of this application.

As shown in FIG. 15, the reinforcement layer 60 includes an adhesive layer 61 and a protective layer 62, and the protective layer 62 is bonded to the electrode plate 11 and the conductive member 30 via the adhesive layer 61.

The protective layer 62 can block burrs of the second electrode plate 12, reducing the risk of conduction between the burrs and the first connection region 40 and improving reliability; and the adhesive layer 61 can secure particles remaining on the first connection region 40, reducing the risk of particles falling into the electrode assembly and improving reliability.

In some embodiments, hardness of the protective layer 62 is greater than hardness of the conductive member 30. The protective layer 62 has high hardness, so that the risk of the protective layer 62 being pierced by burrs is reduced.

In some embodiments, a material of the protective layer 62 is an insulating plastic.

In some embodiments, the material of the protective layer 62 is PET (polyethylene terephthalate).

In some embodiments, the reinforcement layer 60 includes an adhesive tape.

According to some embodiments of this application, this application further provides a battery including a plurality of battery cells 7 according to any one of the above embodiments.

According to some embodiments of this application, this application further provides an electric apparatus including a battery cell 7 according to any one of the above embodiments, where the battery cell 7 is configured to provide electrical energy. The electric apparatus may be any device or system using the battery cell 7 as described above.

Referring to FIG. 4 to FIG. 10, the embodiments of this application provide a cylindrical battery cell 7 including a housing 20, an electrode assembly 10, a current-collecting member 50, and two conductive members 30.

The housing 20 includes a shell 21, an end cover 22, and an electrode terminal 23, where the shell 21 has an opening at one end along a first direction Z, the end cover 22 is configured to cover the opening, the shell 21 has a bottom wall opposite the end cover 22, and the electrode terminal 23 is mounted on the bottom wall.

The electrode assembly 10 is accommodated in the housing 20. The electrode assembly 10 includes a first electrode plate 11, a second electrode plate 12, and a separator 13, a polarity of the first electrode plate 11 is opposite to a polarity of the second electrode plate 12, and the separator 13 is configured to insulate and separate the first electrode plate 11 and the second electrode plate 12.

The first electrode plate 11, the separator 13, and the second electrode plate 12 are wound into an entirety along a winding direction V to form a cylindrical wound structure.

The first electrode plate 11 includes a current collector 111 and an active material layer 112, the current collector 111 includes a coated region 1111 coated with the active material layer 112 and a tab 1112 not coated with the active material layer 112, and the coated region 1111 and the tab 1112 are arranged along the first direction Z. The tab 1112 is located on a side of the coated region 1111 close to the electrode terminal 23.

The current collector 111 includes an insulating substrate 111a and a conductive layer 111b, the conductive layer 111b is disposed on a surface of the insulating substrate 111a, and the active material layer 112 is applied on the conductive layer 111b. The coated region 1111 includes a portion of the conductive layer 111b coated with the active material layer 112, and the tab 1112 includes a portion of the conductive layer 111b not coated with the active material layer 112.

The conductive member 30 includes a conductive body 31 and a bent portion 32, where at least a portion of the tab 1112 is located between the conductive bodies 31 of the two conductive members 30. The tab 1112 and the two conductive bodies 31 are welded to form a first connection region 40. The first connection region 40 includes a plurality of weld spots 41, where each weld spot 41 connects the two conductive layers 111b and the two conductive bodies 31.

The bent portion 32 extends from an end of the conductive body 31 away from the active material layer 112 and is continuously bent multiple times. In the first direction Z, the entire bent portion 32 extends beyond an end of the tab 1112 away from the coated region 1111. For example, the conductive member 30 is subjected to a flattening process to form the bent portion 32; the bent portions 32 of the two conductive members 30 form a dense region; and the dense region has a flattened end face 321 facing the electrode terminal 23.

The current-collecting member is located between the electrode terminal 23 and the flattened end face 321, and the current-collecting member is welded to the electrode terminal 23 and the flattened end face 321.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification but includes all technical solutions falling in the scope of the claims.

**Claims**

1. A battery cell, comprising:

   a housing provided with an electrode lead-out member;
   an electrode assembly accommodated in the housing, wherein the electrode assembly is a cylindrical wound structure, the electrode assembly comprises a first electrode plate, the first electrode plate comprises a current collector and an active material layer, the current collector comprises a coated region coated with the active material layer and a tab not coated with the active material layer, and the coated region and the tab are arranged along a first direction; and a conductive member comprising a conductive body and a bent portion, wherein at least a portion of the conductive body is connected to the tab to form a first connection region, the bent portion is configured to be electrically connected to the electrode lead-out member, the bent portion extends from an end of the conductive body away from the active material layer and is continuously bent multiple times, and in the first direction, the entire bent portion extends beyond an end of the tab away from the coated region.

2. The cylindrical battery cell according to claim 1, wherein the conductive member is wound into a cylindrical structure.

3. The battery cell according to claim 1 or 2, wherein the conductive member is subjected to a flattening process to form the bent portion, an end of the bent portion away from the conductive body forms a flattened end face, and the flattened end face faces the electrode lead-out member and is configured to be electrically connected to the electrode lead-out member.

4. The battery cell according to any one of claims 1 to 3, wherein in the first direction, the first connection region and the bent portion are spaced apart.

5. The battery cell according to claim 4, wherein in the first direction, a minimum distance between the bent portion and the first connection region is D1, a maximum dimension of the bent portion is L1, and D1 and L1 satisfy:

$$0.5 \le D1/L1 \le 3.$$

6. The battery cell according to claim 5, wherein D1 is 1.5 mm to 3.5 mm.

7. The battery cell according to claim 5 or 6, wherein L1 is 1 mm to 3 mm.

8. The battery cell according to any one of claims 1 to 7, wherein

the conductive body is welded to the tab to form the first connection region; and
the battery cell further comprises a reinforcement layer, wherein the reinforcement layer is connected to the conductive body and covers at least a portion of the first connection region.

9. The battery cell according to claim 8, wherein the reinforcement layer comprises an adhesive layer and a protective layer, and the protective layer is bonded to the first connection region via the adhesive layer.

10. The battery cell according to claim 8 or 9, wherein the reinforcement layer is further connected to the active material layer and a portion of the tab located between the active material layer and the conductive body in the first direction.

11. The battery cell according to any one of claims 8 to 10, wherein an elastic modulus of the reinforcement layer is greater than or equal to 0.2 MPa.

12. The battery cell according to any one of claims 8 to 11, wherein in the first direction, a minimum distance between the bent portion and the reinforcement layer is D2; and

a melting point of the reinforcement layer is T; wherein $150°C·mm \le T \times D2$.

13. The battery cell according to claim 12, wherein T is greater than or equal to 150°C.

14. The battery cell according to any one of claims 8 to 13, wherein the electrode assembly further comprises a second electrode plate and a separator, a polarity of the first electrode plate is opposite to a polarity of the second electrode plate, and the separator is configured to separate the first electrode plate and the second electrode plate; and
in the first direction, a distance between an edge of the reinforcement layer close to the bent portion and an edge of the separator close to the bent portion is less than or equal to 2 mm.

15. The battery cell according to any one of claims 1 to 14, comprising two conductive members, wherein at least a portion of the tab is located between the conductive bodies of the two conductive members.

16. The battery cell according to claim 15, wherein when the bent portions of the two conductive members are flattened to be parallel to the first direction, a distance between ends of the two conductive members away from the active material layer in the first direction is 0 mm to 6 mm.

17. The battery cell according to claim 16, wherein when the bent portions of the two conductive members are flattened to be parallel to the first direction, the ends of the two conductive members away from the active material layer are misaligned in the first direction.

18. The battery cell according to any one of claims 15 to 17, wherein the conductive bodies of the two conductive members are connected to the tab to form the first connection region.

19. The battery cell according to claim 18, wherein in the first direction, a portion of the conductive body extends beyond an end of the tab away from the coated region; and portions of the two conductive bodies extending beyond the tab in the first direction are connected to form a second connection region.

20. The battery cell according to claim 19, wherein in the first direction, the second connection region and the bent portion are spaced apart.

21. The battery cell according to any one of claims 1 to 20, wherein the current collector comprises an insulating substrate and a conductive layer, the conductive layer is disposed on a surface of the insulating substrate, and the active material layer is applied on the conductive layer;

   the coated region comprises a portion of the conductive layer coated with the active material layer, and the tab comprises a portion of the conductive layer not coated with the active material layer; and
   the conductive body is connected to the conductive layer.

22. The battery cell according to claim 21, wherein the tab is welded to the conductive body to form the first connection region;

   the current collector comprises two conductive layers, and the two conductive layers are respectively disposed on two sides of the insulating substrate; and
   the first connection region connects the conductive body and the two conductive layers.

23. The battery cell according to claim 22, comprising two conductive members, wherein at least a portion of the tab is located between the conductive bodies of the two conductive members; and the tab and the two conductive bodies are welded to form the first connection region, and the first connection region connects the two conductive bodies and the two conductive layers.

24. The battery cell according to claim 22 or 23, wherein the first connection region comprises a plurality of weld spots.

25. The battery cell according to claim 24, wherein

   the number of the weld spots is k; a capacity of the battery cell is C; a thickness of the conductive layer is t; the weld spots form a weld surface on a surface of the conductive body facing away from the conductive layer; and a perimeter of the weld surface is L2;
   wherein k, C, t, and L2 satisfy:

   $$0.1 \text{ mm}^2/\text{mAh} \leq (t \times k \times L2)/C \leq 1 \text{ mm}^2/\text{mAh}.$$

26. The battery cell according to claim 25, wherein L2 is 0.8 mm to 6 mm.

27. The battery cell according to any one of claims 1 to 26, further comprising a current-collecting member, wherein the current-collecting member is connected to the electrode lead-out member; and
   the current-collecting member is welded to the bent portion.

28. The battery cell according to any one of claims 1 to 27, wherein the bent portion is provided with a weakened structure.

29. The battery cell according to claim 28, wherein the bent portion forms the weakened structure by providing a through hole.

30. A battery, comprising a plurality of battery cells according to any one of claims 1 to 29.

31. An electric apparatus, comprising the battery cell according to any one of claims 1 to 29, wherein the battery cell is configured to provide electrical energy.

FIG. 1

FIG. 2

6

7

FIG. 3

FIG. 4

FIG. 5

EP 4 668 467 A1

FIG. 6

25

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/CN2023/124303** |

**A. CLASSIFICATION OF SUBJECT MATTER**

H01M50/536(2021.01)i; H01M50/531(2021.01)i; H01M50/533(2021.01)i

According to International Patent Classification (IPC) or to both national classification and IPC

**B. FIELDS SEARCHED**

Minimum documentation searched (classification system followed by classification symbols)

IPC: H01M50/-

Documentation searched other than minimum documentation to the extent that such documents are included in the fields searched

Electronic data base consulted during the international search (name of data base and, where practicable, search terms used)

CNTXT, DWPI, ENTXTC, CNKI: 电池, 活性物质, 极耳, 集流体, 卷, 涂覆, 弯, 折, 柱, battery, electrode, pole?, coat+, bend

**C. DOCUMENTS CONSIDERED TO BE RELEVANT**

| Category* | Citation of document, with indication, where appropriate, of the relevant passages | Relevant to claim No. |
| --- | --- | --- |
| A | CN 217768425 U (CONTEMPORARY AMPEREX TECHNOLOGY CO., LTD.) 08 November 2022 (2022-11-08) <br> entire document | 1-31 |
| A | CN 114614069 A (CONTEMPORARY AMPEREX TECHNOLOGY CO., LTD.) 10 June 2022 (2022-06-10) <br> entire document | 1-31 |
| A | CN 218414960 U (CONTEMPORARY AMPEREX TECHNOLOGY CO., LTD.) 31 January 2023 (2023-01-31) <br> entire document | 1-31 |
| A | CN 114050326 A (DFD NEW ENERGY TECHNOLOGY CO., LTD.) 15 February 2022 (2022-02-15) <br> entire document | 1-31 |
| A | CN 217955938 U (JIANGSU ZENERGY BATTERY TECHNOLOGIES CO., LTD.) 02 December 2022 (2022-12-02) <br> entire document | 1-31 |

☑ Further documents are listed in the continuation of Box C.    ☑ See patent family annex.

| | |
| --- | --- |
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **06 November 2023** | **13 November 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/124303** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2023082150 A1 (CONTEMPORARY AMPEREX TECHNOLOGY CO., LTD.) 19 May 2023 (2023-05-19) entire document | 1-31 |
| A | WO 2023092502 A1 (CONTEMPORARY AMPEREX TECHNOLOGY CO., LTD.) 01 June 2023 (2023-06-01) entire document | 1-31 |

Form PCT/ISA/210 (second sheet) (July 2022)

EP 4 668 467 A1

## INTERNATIONAL SEARCH REPORT
### Information on patent family members

International application No.

**PCT/CN2023/124303**

| Patent document cited in search report | | | Publication date (day/month/year) | Patent family member(s) | Publication date (day/month/year) |
|---|---|---|---|---|---|
| CN | 217768425 | U | 08 November 2022 | None | |
| CN | 114614069 | A | 10 June 2022 | None | |
| CN | 218414960 | U | 31 January 2023 | None | |
| CN | 114050326 | A | 15 February 2022 | None | |
| CN | 217955938 | U | 02 December 2022 | None | |
| WO | 2023082150 | A1 | 19 May 2023 | None | |
| WO | 2023092502 | A1 | 01 June 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310691862